# EUROPEAN PATENT APPLICATION

(11) **EP 3 379 850 A1**
(43) Date of publication of application: **26.09.2018**
(21) Application number: 17162069.3
(22) Date of filing: 21.03.2017
(51) Int. Cl.: H04W 4/02, G06K 9/00, H04L 29/08

(54) **METHOD AND DEVICE FOR ACTIVITY RECOGNITION**

(71) Applicant: Nokia Technologies Oy, 02610 Espoo (FI)
(72) Inventor: ACER, Utku Gunay, 2018 Antwerpen (BE); FORLIVESI, Claudio, 2018 Antwerpen (BE)
(74) Representative: Nokia Bell Patent Attorneys

(57) **Abstract**

Embodiments relate to a method for recognizing an activity executed by at least one human being (6) in an area wherein a plurality of wireless communication devices (2) send wireless signals, said method being executed by an activity recognition device (4) and comprising:
- receiving (T1), from at least one wireless monitoring device (3), inference input data specifying, for respective wireless datagrams detected by said at least one wireless monitoring device (3), a receiving time, a source identifier, a received signal strength and multi-frequency channel state information of a wireless signal,
- determining (T2) said activity in function of said inference input data.

## Description

### FIELD OF THE INVENTION

The present invention relates to the field of activity recognition. In particular, the present invention relates to a method and a device for activity recognition based on analysis of wireless local area network signals.

### BACKGROUND

Existing commercial solutions for activity recognition rely on mobile or wearable devices. They typically use accelerometer data to infer the activities of the users. However, using mobile or wearable devices may often be inconvenient.

Other solutions rely on the analysis of wireless signals for activity recognition. Indeed, wireless signals are affected by the objects and people between and around their source and destination. Thus, past research has proposed to analyze the changes in characteristics of the wireless signal, for example changes in the Channel State Information (CSI), to infer activities. However, the known solutions of this type have been designed for a simple setup in a laboratory environment with a single fixed signal source. They are not suitable for real-world deployments, which typically involve a plurality of fixed and/or mobile signal sources.

### SUMMARY

It is thus an object of embodiments of the present invention to propose methods and devices for activity recognition, which do not show the inherent shortcomings of the prior art.

Accordingly, embodiments relate to a method for recognizing an activity executed by at least one human being in an area wherein a plurality of wireless communication devices send wireless signals, said method being executed by an activity recognition device and comprising:
- receiving, from at least one wireless monitoring device, inference input data specifying, for respective wireless datagrams detected by said at least one wireless monitoring device, a receiving time, a source identifier, a received signal strength and multi-frequency channel state information of a wireless signal,
- determining said activity in function of said inference input data.

Correlatively, embodiments relates to a device for recognizing an activity executed by at least one human being in an area wherein a plurality of wireless communication devices send wireless signals, comprising means configured for:
- receiving, from at least one wireless monitoring device, inference input data specifying, for respective wireless datagrams detected by said at least one wireless monitoring device, a receiving time, a source identifier, a received signal strength and multi-frequency channel state information of a wireless signal,
- determining said activity in function of said inference input data.

A wireless communication device may be configured for communication according to one of the IEEE 802.11 a/g/n/ac standards.

In some embodiments, the receiving time is specified by a sequence number and/or the source identifier is specified by a MAC address and/or the received signal strength is specified by the Received Signal Strength Indicator and/or the multi-frequency channel state information is specified by the Channel State information as specified by one of the IEEE 802.11 a/g/n/ac standards.

The method may comprise:
- receiving training input data specifying, for respective wireless datagrams detected by said at least one wireless monitoring device, a receiving time, a source identifier, a received signal strength and multi-frequency channel state information of a wireless signal, wherein the training input data further specifies activities executed by at least one human being,
- training a machine learning model in function of said training input data.

In some embodiments, the method comprises obtaining said training input data specifying activities from one or more wearable devices with activity recognition capacities.

The machine learning model may be based on a Long short-term memory Autoencoder and a Neural Network Classifier.

In some embodiments, the method comprises determining a location associated with the determined activity in function of the inference input data.

Embodiments also relate to a computer program comprising instructions for performing the method mentioned before when said instructions are executed by a computer. The computer program may be stored on a non-transitory computer readable medium.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a block diagram of a system for activity recognition,
Figure 2 is a flowchart of a method for activity recognition, executed in the system of Figure 1, and
Figure 3 is structural view of the activity recognition device of the system of Figure 1.

### DESCRIPTION OF EMBODIMENTS

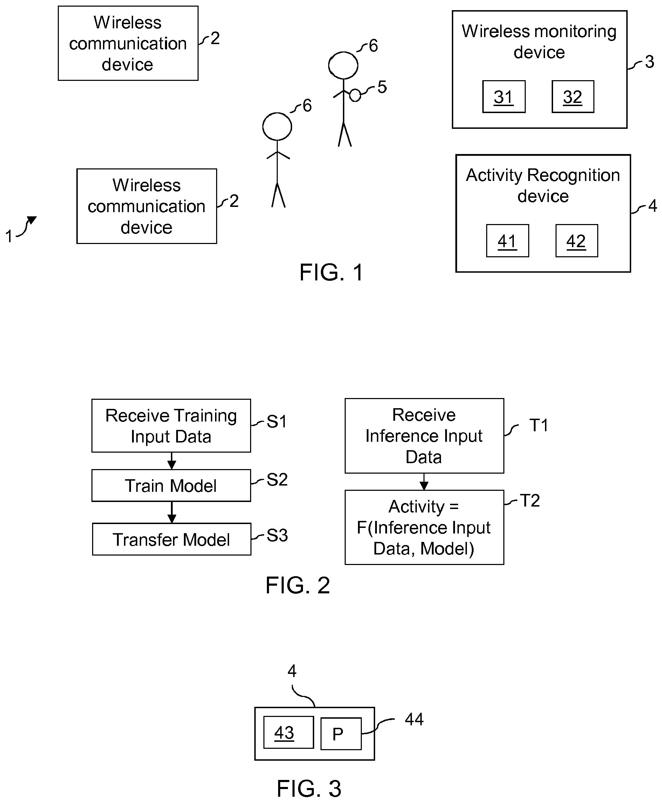

**Figure 1** is a block diagram of a system 1 for activity recognition. The system 1 comprises a plurality of wireless communication devices 2, one or more wireless monitoring device 3 and an activity recognition device 4. In some embodiments, the system 1 also comprises one or more wearable devices 5 worn by respective users 6.

A wireless communication device 2 is configured for communication using a wireless local area protocol comprising a collision avoidance mechanism and frequency division multiplexing in the physical layer. For example, the wireless communication devices 2 are configured for communication according to one of the IEEE 802.11 a/g/n/ac standards (Wi-Fi), which uses Carrier Sense Multiple Access with Collision Avoidance (CSMA/CA) and Orthogonal Frequency-Division Multiplexing (OFDM) in the physical layer.

A wireless communication device 2 may be for example a user terminal (such as a smartphone, personal computer, wearable device...), an office equipment (such as a printer, scanner...), an Internet of Things device (temperature sensor...). It may be mobile or fixed in space. A wireless communication device 2 is associated with a source identifier, for example a MAC address.

A wireless monitoring device 3 is configured for detecting characteristics of the wireless signals sent by the wireless communication devices 2 and for reporting the detected characteristics to the activity recognition device 4.

More specifically, in some embodiments, a wireless monitoring device 3 comprises a wireless interface including an antenna, a physical layer module 31 and a link layer module 32. For respective datagrams (e.g. Wi-Fi frames) received on the wireless interface, the wireless monitoring device 3 determines a tuple specifying a multi-frequency Channel State Information (CSI), a received signal strength, a source identifier and a receiving time. The physical layer module 31 determines the CSI and the link layer module 32 determines the received signal strength, the source identifier and the time.

Modern Wi-Fi enabled devices work based on IEEE 802.11 a/g/n/ac standards that use Orthogonal Frequency Division Multiplexing (OFDM) in the PHY layer. OFDM divides the entire wireless bandwidth into multiple narrowband channels each with a subcarrier at a different frequency. The CSI contains both the amplitude and the phase of the frequency response at each subcarrier. The format of the CSI is for example of vector of complex numbers. This information describes how a signal propagates from the transmitter to the receiver and represents the combined effect of wireless medium including reflection, scattering, fading, and power decay with distance. Between a static transmitter and receiver, the change in the CSI is induced by the physical movements in the area that the signals can reach. The mobility of the devices adds another variable that affects the CSI information.

The received signal strength is for example the Received Signal Strength Indicator (RSSI), which is an aggregate power measurement value in layer 2. For every layer 2 frame, an associate RSSI value aggregates all the subcarriers and paths that the signals traverse. RSSI is a very volatile metric and can be misleading. Due to the superimposition of the multipath components of the wireless signals with phase difference, even a very close signal source may seem to have a very small RSSI.

The source identifier is for example the MAC address of a wireless communication device 2.

Finally, the receiving time is for example specified by a sequence number of the Wi-Fi frame. The wireless monitoring device 3 sends the CSI/RSSI/MAC/Sequence number tuples to the activity recognition device 4, for example individually or in batch of T tuples.

A wireless monitoring device 3 may be a wireless access point to which a wireless communication device 2 sends wireless signal. Alternatively, a wireless monitoring device 3 may have its wireless interface configured in a monitoring mode so that it can receive and inspect any signal transmitted.

The activity recognition device 4 is configured for receiving CSI/RSSI/MAC/Sequence number tuples from one or more wireless monitoring device 3, and for determining an activity executed by at least one human being in an area wherein the plurality of wireless communication devices 2 send wireless signals. The activity recognition device 4 comprises a training module 41 and an inference module 42. The training module 41 is configured for training a machine-learning model in function of training input data, and the inference module 42 is configured for recognizing an activity in function of inference input data.

The input data used by the activity recognition device 4 comprises the tuples received from wireless monitoring devices 3. Accordingly, the input data associated with a sequence of datagrams (e.g. Wi-Fi frames) may be represented as a tensor of (C+1)xTxNxM complex numbers, wherein C is the number of CSI subcarriers, the RSSI provide one additional measurement, T is the time length of the sequence, N is the number of wireless monitoring devices 3 and M is the number of wireless communication devices 2.

The functioning of the training module 41 and the inference module 42 is described in more details with reference to Figure 2.

**Figure 2** is a flowchart of a method for recognizing an activity executed by at least one human being 6 in an area wherein the wireless communication devices 2 send wireless signals. The method is executed by the activity recognition device 4. More specifically, the method comprises a training phase (steps S1-S3) executed by the training module 41 and an inference phase (steps T1-T2) executed by the inference module 42.

During the training phase, the activity recognition device 4 receives training input data associated with a sequence of datagrams sent by the wireless communication devices 2 while at least one human being 6 performs one or more activities in the area (step S1). The training input data specify characteristics of the wireless signal and the types of activities.

More specifically, as explained with reference to Figure 1, the training input data specify, for respective wireless datagrams detected by the wireless monitoring device 3, a receiving time, a source identifier, a received signal strength and multi-frequency channel state information. This may be represented as a tensor of (C+1)xTxNxM complex numbers.

Moreover, the training input data specify one or more activities executed by one or more human being during the sequence of wireless datagrams. More specifically, the training input data specify records of time and activity type. In some embodiments, the records also specify a location. Examples of activity types include walking, sitting, laying down, standing up/sitting down, falling down, etc. This may be obtained for example by a supervisor who manually records the activities, or by the use of wearable devices 5, which provide activity recognition capabilities, for examples based on accelerometers.

Using time as a reference, it is thus possible to label the CSI and RSSI sequences with sequences of activity records.

Then, the activity recognition device 4 determines or trains a machine-learning model in function of the training input data (step S2). A large range of machine learning algorithm using any combination of supervised and unsupervised learning scheme may be used. An example based on LSTM Autoencoder and a Neural Network Classifier is described in more details hereafter.

Then, the activity recognition device 4 transfers the trained machine-learning model from the training module 41 to the inference module 42.

During the inference phase, the activity recognition device 4 receives inference input data associated with a sequence of datagrams sent by the wireless communication devices 2 while at least one human being 6 performs one or more activities in the area (step T1). The inference input data specify characteristics of the wireless signals. More specifically, as explained with reference to Figure 1, the inference input data specify, for respective wireless datagrams detected by the wireless monitoring device 3, a receiving time, a source identifier, a received signal strength and multi-frequency channel state information. This may be represented as a tensor of (C+1)xTxNxM complex numbers.

Then, the activity recognition device 4 determines one or more activity in function of the inference input data, by using the trained machine-learning model (step T2). Depending on the machine-learning model, a unique activity type may be identified, or a list of probabilities associated with activity types may be specified. The inference module 42 may recognize a plurality of activities, for example associated with respective human beings 6 and/or times.

As mentioned before, in some embodiments, the training input data of the training phases include location associated with the activities. In that case, the machine-learning model may be trained to determine, in addition to the activity types, a corresponding location. Thus, in the inference phase, the activity recognition module 42 may infer the location(s) associated with the recognized activities.

In an example, the machine-learning model is based on a LSTM Autoencoder and a Neural Network Classifier.

The LSTM Autoencoder is actually made of two parts: an encoder part followed by a decoder part. The encoder part is trained to reduce the dimensionality of the (C+ 1)xTxNxM tensors to a smaller set of features characterizing the sequence itself, whereas the decoder part is trained to convert this smaller set of features back into the original sequence.

Training itself is in a first phase unsupervised: (C+1)xTxNxM tensors are passed to the LSTM Encoder input and the same sequences are expected out of the LSTM Decoder output. Any error will lead to modifications in the weights of the Autoencoder layers.

After this first step, the decoding part of the autoencoder is discarded and the remaining LSTM Encoder is appended with a sequence of fully-connected Neural Network layers terminating with a last SoftMax layer.

The purpose of these additional layers is to convert the feature set produced by the encoder into a vector of probabilities concerning every possible activity we may be interested in detecting. The purpose of the SoftMax layer is to ensure that the output vector components are all real numbers between 0 and 1, and their sum is always 1, representing probabilities associated with the corresponding activities.

In order to successfully generate these probabilities, these extra layers need to be trained first.

Therefore, in a second step of training (this time supervised), the labeled time sequences couples of (C+1)xTxNxM tensor -activity coming from the input data are then used to train the model formed by the LSTM Encoder and the classifier layers in order to ensure it is capable of detecting actual activities from CSI, RSSI sequences. Training is based on a set of mappings between (C+1)xTxNxM tensors and the activity (or location) they refer to. For example, the mapping is between a (C+1)xTxNxM tensor and a probability vector identifying an activity or location. For each activity (or location) identified in the mapping its corresponding entry in the probability vector is 1 while all the other entries are 0. These probability vectors are used in the second phase of the training to calculate the error of the SoftMax layer.

A similar approach (with a different set of fully connected layers) can be used to train the system for location inference on top activity type.

Both learning steps happen through a mechanism called back-propagation, where the expected result of processing the input through the layers of the neural network is compared to the actual result, and if they differ, the weights inside the layers are modified to increase the degree by which the actual and expected output should match.

A parameter called "learning rate" determines, for each layer, how much its internal weight are affected by the current learning process.

During the first step (unsupervised learning of the LSTM Encoder/Decoder couple), the expected result coincides with the same time-sequence CSI, RSSI as the input.

During the second step (supervised learning of the LSTM Encoder and Fully-Connected Classifier), the input is the time-sequence CSI, RSSI while the expected result is made of the recorded time-sequence activities.

During the second step, it is possible to reduce the learning rate of the LSTM Encoder layers, to ensure that most of the training in this step happens in the fully-connected layers of the Classifier.

After the second step of training is done, the Deep Neural Network corresponding to the LSTM Encoder and Classifier layers is transferred to the inference module 42 which can now perform activity classification in real time using CSI, RSSI time-sequences from any MAC address as they happen, without the need to contact an external database.

This means that detection does not need to happen on a machine with high processing resources, for example inside the cloud, but can be executed by a machine with enough processing power that has direct connectivity with the wireless monitoring devices 3.

On top of that, the wireless monitoring devices 3 can continually record CSI, RSSI sequences and save them periodically, while wearable devices 5 from selected individuals could continue to periodically save activity sequences.

In both cases, periodically means that wireless monitoring devices 3 and wearable devices 5 do not need a persistent connection to the training module 41. Instead, they may flush their time-sequences periodically, when connectivity is available.

This allows the training set to continually enlarge over time, which means that the LSTM Encoder and Classifier can be re-trained over time.

In the system 1, it is possible to recognize the activities performed by one or more human beings 6 who are not wearing a wearable device 5 with activity recognition capacities. By taking into account the combination of a receiving time, a source identifier, a received signal strength and multi-frequency channel state information of a wireless signal, it is possible to perform activity recognition in a real-world setup comprising a plurality of fixed and/or mobile wireless communication devices 2.

The inference module 42 of the activity recognition device 4 typically uses less processing resources than the training module 41. Accordingly, the inference module 42 may be executed on hardware with limited processing resources, for example located with or near one of the wireless monitoring devices 3.

**Figure 3** is a structural view of the activity recognition device 4, which comprises a processor 43 and a memory 44. The memory 44 stores a computer program P which, when executed by the processor 43, causes the activity recognition device 4 to execute the method described above with reference to Figure 2.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represent various processes which may be substantially represented in computer readable medium and so executed by a computer or processor, whether or not such computer or processor is explicitly shown.

Embodiments of the method can be performed by means of dedicated hardware and/or software or any combination of both.

While the principles of the invention have been described above in connection with specific embodiments, it is to be clearly understood that this description is made only by way of example and not as a limitation on the scope of the invention, as defined in the appended claims.

## Claims

1. Method for recognizing an activity executed by at least one human being (6) in an area wherein a plurality of wireless communication devices (2) send wireless signals, said method being executed by an activity recognition device (4) and comprising:
- receiving (T1), from at least one wireless monitoring device (3), inference input data specifying, for respective wireless datagrams detected by said at least one wireless monitoring device (3), a receiving time, a source identifier, a received signal strength and multi-frequency channel state information of a wireless signal,
- determining (T2) said activity in function of said inference input data.

2. Method according to claim 1, wherein a wireless communication device (2) is configured for communication according to one of the IEEE 802.11 a/g/n/ac standards.

3. Method according to claim 1 or 2, wherein the receiving time is specified by a sequence number and/or the source identifier is specified by a MAC address and/or the received signal strength is specified by the Received Signal Strength Indicator and/or the multi-frequency channel state information is specified by the Channel State information as specified by one of the IEEE 802.11 a/g/n/ac standards.

4. Method according to one of claims 1 to 3, comprising
- receiving (S1) training input data specifying, for respective wireless datagrams detected by said at least one wireless monitoring device (3), a receiving time, a source identifier, a received signal strength and multi-frequency channel state information of a wireless signal, wherein the training input data further specifies activities executed by at least one human being (6),
- training (S2) a machine learning model in function of said training input data.

5. Method according to claim 4, comprising obtaining said training input data specifying activities from one or more wearable devices (5) with activity recognition capacities.

6. Method according to one of claims 4 and 5, wherein said machine learning model is based on a Long short-term memory Autoencoder and a Neural Network Classifier.

7. Method according to one of claims 1 to 6, comprising determining a location associated with the determined activity in function of the inference input data.

8. Computer program (P) comprising instructions for performing the method of one of claims 1 to 7 when said instructions are executed by a computer.

9. Device (4) for recognizing an activity executed by at least one human being (6) in an area wherein a plurality of wireless communication devices (2) send wireless signals, comprising means configured for:
- receiving, from at least one wireless monitoring device (3), inference input data specifying, for respective wireless datagrams detected by said at least one wireless monitoring device, a receiving time, a source identifier, a received signal strength and multi-frequency channel state information of a wireless signal,
- determining said activity in function of said inference input data.
